# EUROPEAN PATENT APPLICATION

(11) **EP 4 556 845 A1**
(43) Date of publication of application: **21.05.2025**
(21) Application number: 24212092.1
(22) Date of filing: 11.11.2024
(51) Int. Cl.: G01B 21/04, G01B 11/02

(54) **DEVICE, ARRANGEMENT AND METHOD FOR CALIBRATING A DIGITAL CAMERA OF AN IMAGE PROCESSING SYSTEM**

(30) Priority: 14.11.2023 AT 509212023
(71) Applicant: ABB Schweiz AG, 5400 Baden (CH)
(72) Inventor: Beinhundner, Gerhard, 5233 Pischelsdorf am Engelbach (AT); Waldl, Andreas, 5142 Eggelsberg (AT); Steger, Martin, 5230 Mattighofen (AT)
(74) Representative: Patentanwälte Pinter & Weiss OG

(57) **Abstract**

The invention provides a calibration device (1) for improving the calibration of digital cameras (3) of image processing systems (2), in particular for facilitating and optimizing the calibration. In this case, the at least one information storage means (5) contains specified arrangement properties which describe the arrangement of the calibration features (4) on the calibration device (1), wherein the at least one information storage means (5) on the calibration device (1) contains a reference target position of a reference calibration feature from the calibration features (4) on the calibration device (1), with the specified arrangement properties and the reference target position of the reference calibration feature being readable from the at least one information storage means (5) when the calibration device (1) is used by the digital camera (3) of the image processing system (2), wherein a target position of at least one further calibration feature from the calibration features (4) on the calibration device (1) is ascertainable from the specified arrangement properties and the reference target position of the reference calibration feature (4) when the calibration device (1) is used by an evaluation unit (6) of the image processing system (2), and wherein the at least one information storage means (5) contains a respective correction parameter for the reference calibration feature and/or the at least one further calibration feature, the said correction parameter describing a relative deviation between a known actual position and the target position of the respective calibration feature, with the correction parameter being readable from the at least one information storage means (5) when the calibration device (1) is used by the digital camera (3) of the image processing system (2).

## Description

The present invention relates to a calibration device, in particular a calibration plate, for determining at least one calibration parameter for calibrating a digital camera of an image processing system, with calibration features and at least one information storage means being arranged on the calibration device and the at least one information storage means being inseparably connected to the calibration device, and with the at least one information storage means containing specified arrangement properties which describe the arrangement of the calibration features on the calibration device. The present invention moreover relates to an arrangement and a method for using the calibration device.

Very different image processing systems are used in industrial image processing. In particular, they are used in fields of automation, for instance in pick-and-place machines, virtual reality (VR), augmented reality (AR), metrology (2-D or 3-D measurements), robotics, etc. They also include so-called vision system processes, for example inspection tasks, image or symbol coding, measurements of an object orientation or object dimension, or a multitude of other tasks.

Image processing systems usually consist of a recording unit, for example a digital camera with a lens and an image sensor, additional illumination, a control unit used to control the image recording, and an evaluation unit used to process the recorded image data for further use. The evaluation unit can also be part of the digital camera, or the digital camera can also carry out specific preprocessing tasks on the recorded image data. Downstream processing (including additional downstream processing) of the recorded images might be necessary, for example for filtering, preparing or correcting the image data. The possibly post-processed image data can furthermore be evaluated, e.g. for acquiring measurement values, ascertaining the pose, position or orientation of an object, etc.

Digital cameras of image processing systems are calibrated for precise and reliable image processing applications, as otherwise deviations between the measurement results and losses in accuracy arise. Likewise, optical image errors (so-called aberrations), such as distortion, curvature, etc. can be determined during the calibration. Within the scope of the calibration, calibration data or calibration parameters are determined for a digital camera of an image processing system and are used to correct image data recorded by the said digital camera (e.g., in order to compensate for a curvature in an image). The calibration parameters are stored in the image processing system.

Calibration devices, in particular calibration plates, are used for the calibration of digital cameras of image processing systems. The basic structure of such calibration devices consists of a body (e.g. a plate) made of a material (e.g. metal, plastic, ceramic, glass or composite) and its spatial extent as well as one or more calibration features which are recorded by the digital camera when the calibration device is used. For example, these calibration features can be patterns made of different geometric and colored figures, usually circles (for a very accurate calibration) or else e.g. rings or squares. The calibration features are provided with specific spatial extents (e.g. diameters) and arrangements (e.g. two dimensionally in x- and y-positions) relative to one another on the calibration devices, or the said calibration features are worked into the calibration devices. For example, one possible embodiment is a checkerboard-like arrangement of alternating white and black squares as calibration features.

For the calibration, the calibration devices are arranged, e.g. on a machine, in a measurement plane and are recorded by the digital camera of an image processing system in order to determine calibration parameters from the image data to enable a relation (e.g. a mathematical relationship) between the coordinates in the image, e.g. the pixels, and the spatial coordinates, also referred to as global coordinates, in the space in which the calibration device is situated by using the said calibration parameters.

As a matter of principle, the calibration parameters are composed of intrinsic and extrinsic parameters. In this case, the extrinsic parameters describe the position and orientation of the digital camera in space and serve to transform the location of an object in space from the three-dimensional global coordinates (e.g. x, y, z) to the three-dimensional coordinates of the digital camera of the image processing system in space. The intrinsic parameters describe the properties of the optical components of the digital camera of an image processing system and the position of the image sensor. The intrinsic parameters transform the position of the object from the three-dimensional coordinates of the digital camera of the image processing system in space into the two-dimensional coordinates of the image sensor and the image plane (e.g. x, y), and thus describe the internal geometry of the digital camera of the image processing system. This also includes correct imaging, e.g. without distortion or curvature of the image. As described above, a relationship is thus established between the global coordinates and the coordinates in the image.

To increase the accuracy of such calibrations, information (e.g. in the form of a file) is usually also supplied in addition to the calibration devices and allows compensation of the manufacturing inaccuracies of the calibration devices. However, problems might arise here if the assignment of the file to the specific calibration device is incorrect, for example due to a human error during the application. These cases give rise to a faulty calibration and hence incorrect results in the image processing. Moreover, even more information, e.g. the spatial extents of the calibration device or the focal length of the optics of the digital camera, must be entered or provided manually as a basis for a calibration.

In addition to the risk of an erroneous calibration and the susceptibility to other errors, this increases the calibration outlay since this additional information must be stored in reliably assignable fashion for a further use of the specific calibration device. For example, this is the case if a defective digital camera is replaced at a later stage, and a new digital camera is calibrated.

A further option consists of providing the above-described information in the form of a 2-D code (e.g. QR code) directly on the calibration devices. For example, these 2-D codes contain information about the calibration device, for instance the product name, serial number or properties of the calibration feature (e.g. number of geometric figures) which are recorded by the digital camera and read by an evaluation unit of the image processing system or by the digital camera itself. In US 9,230,326 B1, there is a 2-D code in which the position and/or size of the 2-D code on the calibration device is stored, with the position serving as a reference position for the calibration.

Furthermore, DE 11 2018 002 048 T5 discloses a calibration device with calibration features, with 2-D codes also being provided on the said calibration device. In this case, subsequently measured positions of the calibration features on the calibration device are stored in the 2-D codes. These subsequently measured positions are measured during or else after the production of the calibration device and are stored in the 2-D codes as absolute measurement values. Manufacturing inaccuracies of the calibration features and/or of the calibration device can be taken into account in this way. The disadvantage of the absolute measurement data lies in the large amounts of storage required in the 2-D code, especially in the case of a multiplicity of calibration features on the calibration device since each subsequently measured position of the calibration features must be specified.

A more precise calibration of the digital camera of an image processing system furthermore requires specific optical properties of the digital camera, for instance the exact focal length of the optics. This information can be ascertained within the scope of what is known as a factory calibration (e.g. as disclosed in EP 3 557 523 B1). In this case, a correction model for correcting aberrations is ascertained during the production of the image processing system. Aberrations fall under the intrinsic parameters and are, e.g., a deviation of the principal point (describes an optical axis from the image sensor to the optics) or a distortion of the image caused by the optics of the digital camera or the mechanical design. Should this detailed information be lacking, the calibration device must be recorded and measured at different orientations (tilts) from the digital camera during the calibration, in order to ensure a sufficient accuracy of the calibration. These additional steps during the calibration slow the process down and increase the complexity and susceptibility to errors.

Thus, a stated problem of the present invention lies in improving the calibration of digital cameras of image processing systems, in particular in simplifying and optimizing the calibration.

According to the invention, the problem is solved using a calibration device for calibrating a digital camera of an image processing system, in that the at least one information storage means contains a reference target position of a reference calibration feature from the calibration features on the calibration device, with the specified arrangement properties and the reference target position of the reference calibration feature being readable from the at least one information storage means by the digital camera of the image processing system when the calibration device is used, in that a target position of at least one further calibration feature from the calibration features on the calibration device is ascertainable from the specified arrangement properties and the reference target position of the reference calibration feature by an evaluation unit of the image processing system when the calibration device is used, and the at least one information storage means contains a respective correction parameter for the reference calibration feature and/or the at least one further calibration feature, the said correction parameter describing a relative deviation between a known actual position and the target position of the respective calibration feature, with the correction parameter being readable from the at least one information storage means by the digital camera of the image processing system when the calibration device is used. The accuracy of the calibration of the digital camera of the image processing system increases on account of the correction parameter which contains information about the calibration device, for example measurement data from a measurement of the geometry of the calibration device and/or calibration feature taken after the production (e.g. deviations from manufacturing inaccuracies, production faults, etc.). As a result of the information storage means containing the correction parameter as a relative deviation and the target position of the at least one further calibration feature being ascertained by the evaluation unit of the image processing system, the storage requirements of the information storage means on the calibration device can be reduced significantly in comparison with the storage of absolute positions.

According to the invention, the correction parameter additionally describes a relative deviation of a size and/or a shape and/or an orientation of the reference calibration feature and/or of the at least one further calibration feature.

In a preferred embodiment of the calibration device for calibrating a digital camera of an image processing system, the at least one information storage means is optically readable by means of the digital camera. Since the digital camera must record at least one image of the calibration device in order to carry out the calibration, it is advantageous for the digital camera to also read the at least one information storage means in the process. Alternatively, the at least one information storage means can also be configured as an RFID, which is readable by the digital camera.

In an advantageous embodiment of the calibration device for calibrating a digital camera of an image processing system, the specified arrangement properties, the reference target position of the reference calibration feature and the correction parameter are stored in the at least one information storage means as a 2-D code, preferably as a QR code. These types of 2-D code offer more storage space, especially in comparison with 1D codes, and can be read reliably and quickly by the digital camera. Moreover, QR codes are robust and can still be read by the digital camera even in the case of damage.

In another embodiment, the at least one information storage means additionally contains an identification number of the calibration device. Following the calibration of the digital camera of the image processing system, the at least one calibration parameter can be uniquely assigned to the identification number of the utilized calibration device. Hence, the utilized calibration device can be uniquely identified at a later stage, for example when the at least one calibration parameter is determined again. Moreover, by way of the identification number, it is also possible to ensure that the specified arrangement properties and the reference target position of the reference calibration feature in the information storage means correspond with the utilized calibration device.

In a further embodiment, the at least one information storage means additionally contains the position of the at least one information storage means on the calibration device. For example, the known position of the at least one information storage means can be used to define a reference point for the alignment of the calibration device and/or to determine the orientation of the calibration device, e.g. in an image of the calibration device recorded by the digital camera.

In an arrangement according to the invention of the calibration device for calibrating a digital camera of an image processing system, the digital camera of the image processing system is configured to read the specified arrangement properties, the reference target position of the reference calibration feature and the correction parameter from the at least one information storage means of the calibration device and to transmit the at least one image of the calibration device, the specified arrangement properties, the reference target position of the reference calibration feature and the correction parameter to the evaluation unit of the image processing system, wherein the evaluation unit is designed to ascertain the target position of the at least one further calibration feature from the specified arrangement properties and the reference target position of the reference calibration feature and to evaluate the at least one image of the calibration device and also the reference target position of the reference calibration feature, the target position of the at least one further calibration feature and the correction parameter from the at least one information storage means in order to determine the at least one calibration parameter. The correction parameter increases the accuracy of the calibration since, for example, measurement data from a measurement of the geometry of the calibration device and/or of the calibration feature taken after the production (e.g. deviations from manufacturing inaccuracies, production faults, etc.) are present.

In an advantageous embodiment of the evaluation unit, the latter is configured to receive at least one camera parameter from a factory calibration and evaluate it in order to determine the at least one calibration parameter. By way of the at least one camera parameter, image errors in recorded images of the digital camera, for example a distortion of the image caused by the optics of the digital camera and/or the mechanical design, can be corrected without tilting the calibration device during a calibration. The accuracy of the calibration is increased as a result.

In this case, the at least one camera parameter from the factory calibration is preferably a specified focal length of the digital camera of the image processing system. Manual input of the digital camera focal length is no longer required for the calibration. Hence, the calibration can be performed more quickly, and the susceptibility to errors as a result of an incorrect input of the digital camera focal length can be avoided. Additionally, the tolerances of the specified focal length are smaller in the factory calibration compared to a manual input, whereby the calibration accuracy increases.

The digital camera and/or the evaluation unit advantageously store the determined at least one calibration parameter and use it to correct an image recorded by the digital camera. The corrected image renders possible precise and reliable image processing applications using the image processing system, and deviations of measurement results or losses of accuracy in the image processing applications are avoided.

In a method according to the invention of image correction for an image recorded by a digital camera of an image processing system or for correcting at least one property of an object in an image of the object recorded by the digital camera of the image processing system, the digital camera reads specified arrangement properties, a reference target position of a reference calibration feature and a correction parameter from the at least one information storage means and transmits them to an evaluation unit of the image processing system, wherein the evaluation unit ascertains a target position of at least one further calibration feature from the specified arrangement properties and the reference target position of the reference calibration feature and evaluates the at least one image of the calibration device and also the reference target position of the reference calibration feature, the target position of the at least one further calibration feature and the correction parameter from the at least one information storage means in order to determine the at least one calibration parameter, and the digital camera and/or the evaluation unit stores the determined at least one calibration parameter and uses it to correct an image recorded by the digital camera, or the digital camera and/or the evaluation unit ascertains at least one property of an object from an image of the object recorded by the digital camera and stores the determined at least one calibration parameter and uses it to correct the at least one property of the object. As a result of the correction parameter, there is an increase in the accuracy of the image correction since, for example, measurement data from a measurement of the geometry of the calibration device and/or of the calibration feature taken after the production (e.g. deviations from manufacturing inaccuracies, production faults, etc.) are used.

Advantageously, the evaluation unit receives at least one camera parameter from a factory calibration and ascertains the at least one calibration parameter for calibrating the digital camera of the image processing system from the at least one camera parameter together with the at least one image of the calibration device and also the reference target position of the reference calibration feature, the target position of the at least one further calibration feature and the correction parameter from the at least one information storage means. Image errors in images recorded by the digital camera, for example a distortion of the image caused by the optics of the digital camera and/or the mechanical design, can be corrected using the at least one camera parameter. As a result, the calibration device does not need to be recorded and measured at different orientations (tilts) of the digital camera during the calibration in order to ensure a sufficient accuracy of the calibration. The time taken for a calibration becomes shorter, and the complexity and susceptibility to errors of the calibration become less, as a result of the omission of these additional steps during the calibration.

By preference, the digital camera and/or the evaluation unit stores the determined at least one camera parameter and uses it to correct an image of an object recorded by the digital camera. The corrected image of the object renders possible precise and reliable image processing applications using the image processing system, and deviations of measurement results or losses of accuracy in image processing applications are avoided.

By preference, the at least one calibration parameter is determined for a respective specified calibration distance from a plurality of specified calibration distances from the digital camera of the image processing system to the calibration device, and the at least one calibration parameter for the respective specified calibration distance is stored in the digital camera and/or the evaluation unit, wherein an image of an object recorded by the digital camera is corrected by the at least one stored calibration parameter whose calibration distance comes closest to the distance from the digital camera to the object while the object is recorded. For example, should the image processing system be used on a conveyor belt, this allows the suitable at least one calibration parameter to be chosen according to the size of the object (whereby the distance from the object to the digital camera is changed), and allows an image of the object recorded by the digital camera to be corrected. Alternatively, an interpolation of the stored calibration parameters can also be carried out in order to determine the suitable at least one calibration parameter for the distance from the digital camera to the object while the object is recorded. The flexibility of the digital camera can be increased by the stored calibration parameters since a suitable calibration parameter can be chosen or determined for a multiplicity of different distances from the digital camera to the object.

The present invention is explained in detail below with reference to figures 1 to 3, which show advantageous configurations of the invention in exemplary, schematic and non-limiting fashion. In this case:
Fig. 1 shows the basic structure of the calibration device according to the invention and an arrangement with a digital camera of an image processing system,
Fig. 2a shows an arrangement of the calibration device according to the invention with different calibration distances from the digital camera of the image processing system to the calibration device,
Fig. 2b shows an arrangement of the digital camera of the image processing system for an image processing application and
Fig. 3 shows an exemplary procedure of the method according to the invention with the calibration device.

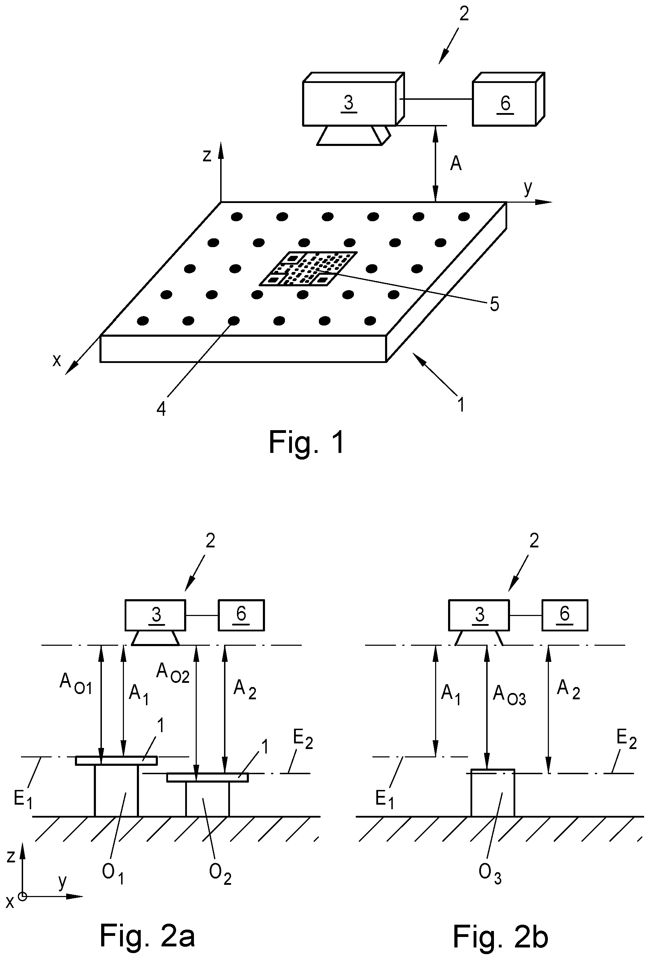

Fig. 1 depicts the basic structure of the calibration device 1. By way of example, a calibration plate is depicted here as a calibration device 1 as this forms a usual embodiment in the prior art. It is self-evident that the form of the calibration device 1 is not restricted to this embodiment. By preference, the calibration device 1 is manufactured from a light but robust material with a coefficient of thermal expansion that is as small as possible, for example glass, ceramic or the like, so that the calibration device 1 is easy to handle during the application and maintains its shape (e.g., is not distorted or otherwise deformed) in the case of temperature fluctuations.

Calibration features 4 are arranged on the calibration device 1; usually, there are a multiplicity of calibration features 4 arranged in a manner distributed over at least a portion of the surface of the calibration device 1. Essentially, a calibration feature 4 is an identifiable feature with a specific geometric shape on the calibration device 1. The arrangement of the calibration features 4 on the calibration device 1 is known, for example on account of the calibration device 1 manufacturing process. In this case, the arrangement of the calibration features 4 on the calibration device 1 is described by arrangement properties. For example, the arrangement properties describe the arrangement of the calibration features 4 on the calibration device 1 by way of a type of pattern (e.g. rectangular), a total number of the calibration features 4 (e.g. per column and row), distances between the calibration features 4, a numbering of the calibration features 4, etc.

By way of example, a plurality of same-sized circles spaced apart equidistantly (e.g. as measured between the centers of the circles) in a manner distributed over the calibration device 1 are provided as calibration features 4 in Fig. 1. In this case, the calibration features 4 are arranged on the calibration device 1 in a manner distributed in columns and rows, with it being self-evident that e.g. a circular, ring-shaped, spiral or hexagonal arrangement, or else any other type of arrangement, of the calibration features 4 on the calibration device 1 is also possible. All that is important is that the arrangement of the calibration features 4 is known or specified, and the arrangement is described by the specified arrangement properties.

Fig. 1 depicts a Cartesian coordinate system by way of example, with x-, y- and z-directions. The origin of the coordinate system can be located at a reference point on the calibration device 1 (e.g. in a corner of or centrally on the calibration device 1). For example, a position of a calibration feature from the calibration features 4 on the calibration device 1 (in the x-, y- and z-directions of the coordinate system) might be specified from the reference point (e.g. to the center of the calibration feature). The arrangement of the calibration features 4 on the calibration device 1 can be determined from a reference position on the calibration device 1 by way of the type of pattern, the total number of calibration features 4 and the specified distances between the calibration features 4, without needing to specify a position for each calibration feature. In another exemplary embodiment, the calibration features 4 are arranged on concentric circles, with a certain number of calibration features 4 being arranged on each circle. It would be sufficient in this case for the specified arrangement properties to describe the center of the concentric circles, the diameters thereof and the total number of calibration features 4 per circle.

Hence, any desired arrangement of the calibration features 4 on the calibration device 1 can be described by very little information in the form of the arrangement properties.

Rather than in circles, the calibration features 4 on the calibration device 1 can also be configured in other geometric shapes, for example as a square, rectangle, ring, etc.

The calibration features 4 can be worked into the calibration device 1 (e.g. drilled, stamped or engraved); alternatively, they might also be printed thereon, adhesively bonded thereon, etc., wherein the calibration features 4 should not detach from the calibration device 1. In this case, the calibration features 4 can be embodied with different colors, with a high contrast, like in Fig. 1 with dark circles on a bright, preferably low-reflection surface of the calibration device 1, being advantageous so that the calibration features 4 are clearly identifiable in an image recorded by a digital camera 3 of an image processing system 2.

A target position of a calibration feature 4 on the calibration device 1 describes the position of the calibration feature 4 as it should be present on the calibration device 1. The target position arises from the design of the utilized calibration device 1. In comparison with the target position of the calibration feature 4, the actual position of the calibration feature 4 describes how it is actually present on the calibration device 1. The actual positions of the calibration features 4 depend on manufacturing accuracies, production defects, etc. of the calibration features 4 and/or of the calibration device 1 and are determined during or after the production of the calibration device 1, for example by measuring the calibration features 4 and/or the calibration device 1.

At least one information storage means 5 is arranged on the calibration device 1, with the at least one information storage means 5 being inseparably connected to the calibration device 1. In this case, inseparable means that the at least one information storage means 5 remains connected to the calibration device 1 over the service life of the calibration device 1, and cannot be non-destructively detached from the calibration device 1 when the calibration device 1 is used according to the invention. Hence, it is possible to ensure the correct assignment of data stored in the information storage means 5 to the specific calibration device 1. A faulty calibration (e.g. due to human errors in the application) and hence incorrect results in the image processing are avoided. For example, the at least one information storage means 5 can be adhesively bonded, printed, impressed (e.g. stamped, engraved, etc.) on the calibration device 1 or secured thereto in any other suitable way. In this case, the said information storage means can be arranged centrally on the calibration device 1, as depicted in Fig. 1. Depending on the application, the at least one information storage means 5 can also be arranged in a corner of, laterally on, or on the back side of the calibration device 1.

By preference, the at least one information storage means 5 is optically readable by the digital camera 3 of the image processing system 2. As a preferred embodiment of the at least one information storage means 5, a 2-D code (in particular a QR code, as depicted in Fig. 1, or a DataMatrix code) is provided on the calibration device 1. However, in principle, it is possible to use any conceivable embodiment of information storage means 5 which is designed to store data for the calibration of the digital camera 3 of the image processing system 2 and to be read for a calibration, preferably quickly and reliably, by the digital camera 3 of the image processing system 2. For example, use can also be made of other optoelectronically readable scripts such as 1-D codes (e.g. a barcode), but also information storage means 5 that cannot be read optically, for example RFID transponders.

The at least one information storage means 5 can also be subdivided into a number of information storage units; for example, an optically readable information storage means 5 might comprise a plurality of 2-D codes as information storage units. Depending on the calibration device 1 and its spatial extents, a plurality of information storage means 5 might also be provided on the calibration device, wherein each information storage means 5 might in turn comprise a number of information storage units. This can ensure that the digital camera 3 can read at least one information storage means 5 when the calibration device is used for calibration purposes. In this case, the information storage means 5 can be arranged in different embodiments (e.g. type, size, etc.) and at different positions on the calibration device 1. Consequently, the calibration data can also be divided among different information storage units of an information storage means 5 or else among different information storage means 5. However, only a single information storage means 5 is arranged on the calibration device 1 in a preferred embodiment.

The at least one information storage means 5 contains a reference target position of a reference calibration feature from the calibration features 4 on the calibration device 1. Hence, the reference calibration feature is one of the calibration features 4 arranged on the calibration device 1. Advantageously, the reference target position of a single reference calibration feature from the calibration features 4 is sufficient. However, it might be advantageous to use a plurality of the calibration features 4 as reference calibration features, for example if only a portion of the calibration device 1 is recorded by the digital camera 3 during the calibration. However, the number of reference calibration features is in any case smaller than the number of calibration features 4 which are arranged on the calibration device 1, in particular smaller than the number of calibration features 4 which are arranged on the calibration device 1 and able to be captured in one image by the digital camera 3. For example, the reference target position of the reference calibration feature can be output as a target position on the calibration device 1 from a reference point on the calibration device 1 (e.g. a corner or center of the calibration device 1) in the x-, y- and z-directions of the coordinate system.

Furthermore, the at least one information storage means 5 contains the specified arrangement properties which describe the arrangement of the calibration features 4 on the calibration device 1. When the calibration device 1 is used, the specified arrangement properties and the reference target position of the reference calibration feature are readable from the at least one information storage means 5 by the digital camera 3 of the image processing system 2. When the calibration device 1 is used, an evaluation unit 6 of the image processing system 2 is designed to ascertain a target position of at least one further calibration feature (which differs from the reference calibration feature) from the calibration features 4 on the calibration device 1 from the specified arrangement properties and the reference target position of the reference calibration feature. To this end, a suitable algorithm designed to determine the target position of the at least one further calibration feature on the basis of the arrangement properties and the reference target position of the reference calibration feature can be stored in the evaluation unit 6 of the image processing system 2.

By preference, the type of pattern, the total number and size of the calibration features 4 and the distances between the calibration features 4 are specified as arrangement properties. In any case, these arrangement properties must be specified to allow the evaluation unit 6 of the image processing system 2 to ascertain the target position of the at least one further calibration feature. The fewer arrangement properties are specified, the lower the storage requirements of the at least one information storage means 5.

The target positions of all other calibration features 4 can be ascertained from the reference target position of a single reference calibration feature and the arrangement properties. Hence, the target positions of the calibration features 4 can be stored in very storage space-efficient fashion in the at least one information storage means 5.

The at least one information storage means 5 also contains a correction parameter for each calibration feature 4, usable for the calibration, on the calibration device 1, and hence also contains this for the reference calibration feature provided that the latter is provided for use during the calibration. A correction parameter describes a relative deviation between a known actual position and the target position of the reference calibration feature and/or between a known actual position and the target position of the at least one further calibration feature (which was determined from the reference calibration feature and the arrangement properties). The known actual position is for example determined during or after the production of the calibration device 1, e.g. by measuring the calibration features 4 and/or the calibration device 1. Suitable and known measurement methods can be used to this end, and so these need not be discussed in detail here.

When the calibration device 1 is used, the correction parameter is readable from the at least one information storage means 5 by the digital camera 3 of the image processing system 2.

By preference, the correction parameter additionally describes a relative deviation of a size and/or a shape and/or an orientation of the reference calibration feature and/or of the at least one further calibration feature. In this case, in a manner comparable with the position, the correction parameter can for example describe a relative deviation between a known actual quantity and a target quantity of the reference calibration feature (e.g. contained in the specified arrangement properties) and/or of the at least one further calibration feature.

As a result of the at least one information storage means 5 containing the correction parameter as a relative deviation and the target position of the at least one further calibration feature being ascertained by the evaluation unit 6 of the image processing system 2, the storage requirements of the information storage means 5 on the calibration device 1 can be reduced significantly. For example, storing the absolute actual position and absolute target position of a calibration feature (e.g. 999.99 mm and 1000.00 mm as coordinate in the coordinate system) necessitates a greater storage requirement in the at least one information storage means 5 in comparison with storing the correction parameter as a relative deviation (e.g. - 0.01 mm). Additionally, the relative deviation can be advantageously encoded and e.g. expressed in powers of ten (e.g. -10⁻⁵ m, whereby only the value "1" would still need to be stored for the deviation of 0.01 mm), whereby furthermore the storage requirements of the at least one information storage means 5 can be reduced.

The provision of the target position on the calibration device 1 and the associated correction parameter is a minimum prerequisite for a calibration feature on the calibration device 1 that can be used for calibration purposes. The target position (reference target position) of the reference calibration feature is specified. As described, the target position of the at least one further calibration feature can be determined from the reference target position of the reference calibration feature and the arrangement properties.

By preference, the position of the at least one information storage means 5 on the calibration device 1 (e.g. centrally on the calibration device 1 as in Fig. 1) is contained in the at least one information storage means 5. The position can be read from the at least one information storage means 5 by the digital camera 3 and can be used, for example, as a reference point for the calibration and/or for determining the orientation of the calibration device 1 in an image recorded by the digital camera 3. The position of the at least one information storage means 5 on the calibration device 1 can be specified, for example, from a corner or the center of the calibration device 1 in the x-, y- and z-directions in the coordinate system in Fig. 1.

Fig. 1 depicts an exemplary arrangement of the digital camera 3 of the image processing system 2 with a calibration device 1. For example, the digital camera 3 comprises optical components, for example a lens with a focal length and a stop, and a control unit used to control image recording. In this case, the digital camera 3 can be integrated into the image processing system 2 or be present externally. The calibration device 1 is arranged in a recording area of the digital camera 3 for the calibration of the digital camera 3 of the image processing system 2. The calibration device 1 is arranged spaced apart from the digital camera 3 of the image processing system 2 by a specified calibration distance A (e.g. in the z-direction in Fig. 1). In this case, the calibration device 1 is preferably aligned at right angles to a main axis of the digital camera 3. It is also possible that the calibration device 1 is positioned with a tilt, e.g. at an angle with respect to the main axis that differs from a right angle. The digital camera 3 of the image processing system 2 is configured to record at least one image of the calibration device 1 and to read the at least one information storage means 5. The digital camera 3 is positioned such that the calibration device 1 is situated at least in part within the recording area of the digital camera 3 such that at least one image of the calibration device 1 can be recorded by the digital camera 3 and that the at least one information storage means 5 can be read.

Furthermore, the evaluation unit 6, which is provided in the image processing system 2 for example, is used to process the image data recorded by the digital camera 3 and the data from the at least one information storage means 5 (the specified arrangement properties, the reference target position of the reference calibration feature, the correction parameter) for further use. The evaluation unit 6 can also be part of the digital camera 3 or be present externally. By preference, the evaluation unit 6 is microprocessor-based hardware, for example a microcontroller. The evaluation unit 6 and/or the digital camera 3 can also carry out certain preprocessing steps on the recorded image data, and/or downstream processing (including additional downstream processing) of the recorded images might be necessary, for example for filtering, preparing and/or correcting the image data.

An illumination unit (not depicted in Fig. 1) might also be present, for example integrated in the image processing system 2 or externally, in order to illuminate the calibration device 1 for the calibration of the digital camera 3. For example, the illumination unit can be controlled by the control unit of the digital camera 3. The illumination should be implemented as uniformly as possible over the entire area of the calibration device 1 or over the at least one calibration feature 4. The calibration device 1 can also have a self-luminous embodiment, for example such that the at least one calibration feature 4 itself shines as uniformly as possible with light at a specific wavelength (e.g. as a punctiform light-emitting diode (LED)). What is important here is that a homogeneously bright, preferably circular image representation is obtained in the image for each LED. For example, to this end, the LEDs could be lowered into drilled holes in the calibration device 1, with a ground glass screen arranged thereabove.

The digital camera 3 of the image processing system 2 is configured to (e.g. optically) read the specified arrangement properties, the reference target position of the reference calibration feature and the correction parameter from the at least one information storage means 5 of the calibration device 1 and to transmit the at least one image of the calibration device 1, the specified arrangement properties, the reference target position of the reference calibration feature and the correction parameter to the evaluation unit 6 of the image processing system 2, for example by way of a suitable wired or wireless connection. The evaluation unit 6 is designed to ascertain the target position of the at least one further calibration feature from the specified arrangement properties and the reference target position of the reference calibration feature and to evaluate the at least one image of the calibration device 1 and also the reference target position of the reference calibration feature and the target position of the at least one further calibration feature and the correction parameter from the at least one information storage means 5 in order to determine the at least one calibration parameter using known calibration methods, e.g. using an initial calculation with the subsequent numerical optimization of defined parameters. For example, a suitable algorithm is known from "A Flexible New Technique for Camera Calibration" (1998) by Zhoung Zhang.

The digital camera 3 and/or the evaluation unit 6 are configured to store the determined at least one calibration parameter and to use the latter to correct an image (e.g. of an object) recorded by the digital camera 3 (e.g. using the known pinhole camera model of Hartley & Zisserman ("Multiple View Geometry in Computer Vision", Cambridge University Press (2003)), using the known distortion model of Duane C Brown ("Decentering distortion of lenses", in: Photometric Engineering 32.3 (1966), pp. 444-462) or other suitable mathematical models). Alternatively, the digital camera 3 and/or the evaluation unit 6 are configured to ascertain at least one property of the object from the recorded image and to correct this at least one property using the at least one stored calibration parameter. In this case, the at least one property of the object can describe in particular a position, a dimension, a size, an orientation or a shape of the object. In this case, the at least one property can be ascertained in pixels, for example, wherein a conversion into a metric unit (e.g. millimeters) should also be understood to be a correction of this property using the at least one calibration parameter.

For example, the at least one calibration parameter can be stored in a storage unit integrated in the digital camera 3 or in the evaluation unit 6. It is also possible to store the at least one calibration parameter in an external storage unit (e.g. in a cloud). By preference, the at least one information storage means 5 contains an identification number which can be read from the at least one information storage means 5 by the digital camera 3, wherein the evaluation unit 6 can assign for example the at least one calibration parameter to this identification number in order to store the at least one calibration parameter for e.g. a specified calibration distance A.

The evaluation unit 6 is preferably configured to receive at least one camera parameter from a factory calibration and evaluate it in order to determine the at least one calibration parameter. For example, the factory calibration is carried out during the production of the digital camera 3. The at least one camera parameter from the factory calibration describes specific optical properties of the digital camera 3 (e.g. of the optics). In this case, the at least one camera parameter can also describe properties of an illumination unit that was used during the factory calibration (e.g. with different wavelengths). Using the at least one camera parameter, it is possible to correct image errors, e.g. a geometric distortion or chromatic aberration, in the recorded images. The properties, causes and effects of these image errors are known, so they are not discussed in detail here. By preference, the at least one camera parameter is a specified focal length of the digital camera 3 of the image processing system 2. The at least one camera parameter can also be a specified focal distance and/or a specified stop of the optics of the digital camera 3. The at least one camera parameter from the factory calibration can be provided in an external storage unit (e.g. in a cloud) or stored in the digital camera 3 or in the evaluation unit 6.

Fig. 2a shows an exemplary arrangement of the calibration device 1 according to the invention, with different calibration distances A₁, A₂ from the digital camera 3 of the image processing system 2 to the calibration device 1. In this case, e.g. one and the same calibration device 1 is successively arranged for the respective calibration distance A₁, A₂, as described hereinbelow. For example, the digital camera 3 of the image processing system 2 is arranged either stationarily or movably in space, e.g. on a ceiling (not depicted in Figs. 2a and 2b) above the calibration device 1 or on a different suitable holding device. The digital camera 3 is positioned such that the calibration device 1 is situated within the recording area of the digital camera 3 such that at least one image of the calibration device 1 can be recorded by the digital camera 3 and that the at least one information storage means 5 can be read. Objects O₁, O₂ of different sizes are arranged in Fig. 2a. For example, the objects O₁, O₂ might be packets, wherein these might be arranged on a conveyor belt (not depicted in Figs. 2a and 2b) and can be moved past the digital camera 3 at a distance A_{O1}, A_{O2}. When used for calibrating the digital camera 3 of the image processing system 2, the calibration device 1 is positioned (e.g. on one of the objects O₁, O₂) in a plane E₁, E₂ (depicted schematically in Figs. 2a and 2b) at right angles to the camera axis of the digital camera 3, with the digital camera 3 of the image processing system 2 being arranged spaced apart from the respective plane E₁, E₂ by a specified calibration distance A₁, A₂. The respective specified calibration distance A₁, A₂ could extend e.g. from the surface of the calibration device 1 (as depicted in Fig. 2a) to the digital camera 3 (e.g. to an image plane of an image sensor of the digital camera 3; not depicted in Figs. 2a and 2b). For example, during the calibration, the calibration device 1 might also be held against one of the objects O₁, O₂ by a robotic arm or any other suitable holding device (not depicted in Figs. 2a and 2b). Naturally, further objects O₁, O₂ with different or the same sizes can also be arranged for the calibration of the digital camera 3 of the image processing system 2. For example, ten objects O₁, O₂ of different sizes might be present, and, of these, the smallest object O₁, O₂, the largest object O₁, O₂ and an object O₁, O₂ whose size is between the smallest and the largest object O₁, O₂ are used for the calibration of the digital camera 3. In order to calibrate the digital camera 3 of the image processing system 2, the calibration device 1 is arranged in each case at the three objects O₁, O₂, for example, with consequently three specified calibration distances A₁, A₂ being available.

When the calibration device 1 is used to calibrate the digital camera 3 of the image processing system 2, the digital camera 3 of the image processing system 2 records at least one image of the calibration device 1. In the process, the calibration device 1 is for example positioned on the object O₁ in the plane E₁, and the digital camera 3 is spaced apart from the plane E₁ by the calibration distance A₁. In this case, the digital camera 3 reads the specified arrangement properties, the reference target position of the reference calibration feature and the correction parameter from the at least one information storage means 5. The at least one image of the calibration device 1, the specified arrangement properties, the reference target position of the reference calibration feature and the correction parameter are transmitted to the evaluation unit 6 of the image processing system 2. The evaluation unit 6 ascertains the target position of the at least one further calibration feature from the specified arrangement properties and the reference target position of the reference calibration feature and evaluates the at least one image of the calibration device 1 and also the reference target position of the reference calibration feature, the target position of the at least one further calibration feature and the correction parameter from the at least one information storage means 5 in order to determine the at least one calibration parameter.

By preference, the evaluation unit 6 receives the at least one camera parameter from the factory calibration and ascertains the at least one calibration parameter for calibrating the digital camera 3 of the image processing system 2 from the at least one camera parameter together with the at least one image of the calibration device 1 and also the reference target position of the reference calibration feature, the target position of the at least one further calibration feature and the correction parameter from the at least one information storage means 5. The digital camera 3 and/or the evaluation unit 6 preferably store the determined at least one calibration parameter and use the latter in order to correct an image of the object O₁, O₂ (e.g. of object O₁ in this case) recorded by the digital camera 3.

The at least one calibration parameter is preferably determined for a respective specified calibration distance A₁, A₂ from a plurality of specified calibration distances A₁, A₂ from the digital camera 3 of the image processing system 2 to the calibration device 1, and the at least one calibration parameter for the respective specified calibration distance A₁, A₂ is stored in the digital camera 3 and/or in the evaluation unit 6. As an alternative to the calibration distance, the at least one calibration parameter can also be determined for different focus settings or stop settings of the digital camera 3 or for different wavelengths from the illumination unit. An image of the object O₁, O₂ recorded by the digital camera 3 is corrected by the calibration parameter whose calibration distance A₁, A₂ comes closest to the distance A_{O1}, A_{O2} from the digital camera 3 to the object O₁, O₂ while the object O₁, O₂ is recorded. Alternatively, an interpolation of the stored calibration parameters can also be carried out in order to determine the suitable at least one calibration parameter for the distance A_{O1}, A_{O2} from the digital camera 3 to the object O₁, O₂ while the object O₁, O₂ is recorded. The same procedure can also be carried out in the case of different focus settings, stop settings or illumination settings, or else in the case of other different settings of the digital camera 3.

The digital camera 3 of the image processing system 2 can be quickly and easily adapted to changing boundary conditions by determining the at least one calibration parameter for different respective calibration distances A₁, A₂ (or other settings). For example, objects O₁, O₂ (e.g. packets) of different sizes might be conveyed on a conveyor belt during an image processing application, whereby the distance A_{O1}, A_{O2} from the object O₁, O₂ to the digital camera 3 changes. By way of example, a further object O₃ is depicted in Fig. 2b, the size of which is located between the planes E₁, E₂, but closer to the plane E₂. It is not necessary to recalibrate the digital camera 3 for the object O₃; instead, for example, the distance A_{O3} from the digital camera 3 to the object O₃ is measured (e.g. using a laser rangefinder), and an image of the object O₃ recorded by the digital camera 3 is corrected using the calibration parameter whose calibration distance A₁, A₂ comes closest to the distance A_{O3} from the digital camera 3 to the object O₃ while the object O₃ is recorded. For example, in this case, the calibration distance A₂ comes closest to the distance A_{O3} from the digital camera 3 to the object O₃, whereby an image of the object O₃ recorded by the digital camera 3 is corrected using the at least one calibration parameter ascertained with the calibration distance A₂. The at least one calibration parameter for the respective calibration distance A₁, A₂ can also be stored as a so-called formula in the digital camera 3 and/or in the evaluation unit 6. Alternatively, the calibration parameter for the distance A_{O3} from the digital camera 3 to the object O₃ could also be determined by an interpolation, as described above.

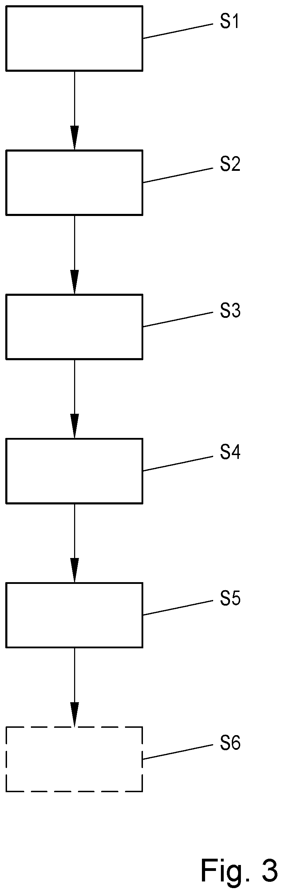

Finally, Fig. 3 depicts an exemplary procedure of the method for calibrating a digital camera 3 of an image processing system 2 using the calibration device 1 according to the invention. In this case, a first step S1 consists of positioning the calibration device 1 in a plane E₁, E₂ (as depicted in Fig. 2a). In this case, the digital camera 3 of the image processing system 2 is arranged spaced apart from the plane E₁, E₂ by a specified calibration distance A₁, A₂. At least one image of the calibration device 1 is recorded by the digital camera 3 in a second step S2. In a third step S3, the digital camera 3 reads the specified arrangement properties, the reference target position of the reference calibration feature and the correction parameter from the at least one information storage means 5. It is self-evident that the specified arrangement properties, the reference target position of the reference calibration feature and the correction parameter can already be read from the at least one information storage means 5 by the digital camera 3 before the digital camera 3 records the at least one image of the calibration device 1. In a fourth step S4, the at least one image, the specified arrangement properties, the reference target position of the reference calibration feature and the correction parameter are transmitted to the evaluation unit 6 of the image processing system 2. In a fifth step S5, the evaluation unit 6 ascertains the target position of the at least one further calibration feature from the specified arrangement properties and the reference target position of the reference calibration feature and evaluates the at least one image of the calibration device 1 and also the reference target position of the reference calibration feature, the target position of the at least one further calibration feature and the correction parameter from the at least one information storage means 5 in order to determine the at least one calibration parameter. The digital camera 3 and/or the evaluation unit 6 store the determined at least one calibration parameter and use the latter in a sixth step S6, in order to correct an image recorded by the digital camera 3. Alternatively, in the sixth step S6, the digital camera 3 and/or the evaluation unit 6 can ascertain at least one property of an object O₁, O₂, O₃ from an image of the object O₁, O₂, O₃ recorded by the digital camera 3 and store the determined at least one calibration parameter and use the latter to correct the at least one property of the object O₁, O₂, O₃. By preference, the evaluation unit 6 receives the at least one camera parameter from the factory calibration in the fifth step S5, in order to ascertain the at least one calibration parameter for calibrating the digital camera 3 of the image processing system 2 from the at least one camera parameter together with the at least one image of the calibration device 1 and also the reference target position of the reference calibration feature, the target position of the at least one further calibration feature and the correction parameter from the at least one information storage means 5.

## Claims

1. A calibration device (1), in particular a calibration plate, for determining at least one calibration parameter for calibrating a digital camera (3) of an image processing system (2),
with calibration features (4) and at least one information storage means (5) being arranged on the calibration device (1) and the at least one information storage means (5) being inseparably connected to the calibration device (1),
with the at least one information storage means (5) containing specified arrangement properties which describe the arrangement of the calibration features (4) on the calibration device (1),
**wherein**
the at least one information storage means (5) contains a reference target position of a reference calibration feature from the calibration features (4) on the calibration device (1), with the specified arrangement properties and the reference target position of the reference calibration feature being readable from the at least one information storage means (5) is used by the digital camera (3) of the image processing system (2) when the calibration device (1),
**wherein** a target position of at least one further calibration feature from the calibration features (4) on the calibration device (1) is ascertainable from the specified arrangement properties and the reference target position of the reference calibration feature by an evaluation unit (6) of the image processing system (2) when the calibration device (1) is used,
**and wherein** the at least one information storage means (5) contains a respective correction parameter for the reference calibration feature and/or the at least one further calibration feature, the said correction parameter describing a relative deviation between a known actual position and the target position of the respective calibration feature, with the correction parameter being readable from the at least one information storage means (5) by the digital camera (3) of the image processing system (2) when the calibration device (1) is used.

2. The calibration device (1) as claimed in claim 1, **wherein** the correction parameter additionally describes a relative deviation of a size and/or a shape and/or an orientation of the reference calibration feature and/or of the at least one further calibration feature.

3. The calibration device (1) as claimed in claim 1 or 2, **wherein** the at least one information storage means (5) is optically readable by means of the digital camera (3).

4. The calibration device (1) as claimed in claim 3, **wherein** the specified arrangement properties, the reference target position of the reference calibration feature and the correction parameter are stored in the at least one information storage means (5) as a 2-D code, preferably as a QR code.

5. The calibration device (1) as claimed in any of claims 1 to 4, **wherein** the at least one information storage means (5) additionally stores an identification number of the calibration device (1).

6. The calibration device (1) as claimed in any of claims 1 to 5, **wherein** the at least one information storage means (5) additionally contains the position of the at least one information storage means (5) on the calibration device (1).

7. An arrangement for determining at least one calibration parameter for calibrating a digital camera (3) of an image processing system (2) using a calibration device (1) as claimed in any of claims 1 to 6, with the calibration device (1) being arranged in a recording area of the digital camera (3) and the digital camera (3) of the image processing system (2) being configured to record at least one image of the calibration device (1), **wherein** the digital camera (3) of the image processing system (2) is configured to read the specified arrangement properties, the reference target position of the reference calibration feature and the correction parameter from the at least one information storage means (5) of the calibration device (1) and transmit the at least one image of the calibration device (1), the specified arrangement properties, the reference target position of the reference calibration feature and the correction parameter to the evaluation unit (6) of the image processing system (2), and the evaluation unit (6) is designed to ascertain the target position of the at least one further calibration feature from the specified arrangement properties and the reference target position of the reference calibration feature and to evaluate the at least one image of the calibration device (1) and also the reference target position of the reference calibration feature, the target position of the at least one further calibration feature and the correction parameter from the at least one information storage means (5) in order to determine the at least one calibration parameter.

8. The arrangement as claimed in claim 7, **wherein** the image recorded by the digital camera (3) images the information storage means (5).

9. The arrangement as claimed in claim 7 or 8, **wherein** the evaluation unit (6) is configured to receive at least one camera parameter from a factory calibration and evaluate it in order to determine the at least one calibration parameter.

10. The arrangement as claimed in claim 9, **wherein** the at least one camera parameter from the factory calibration is a specified focal length of the digital camera (3) of the image processing system (2).

11. The arrangement as claimed in any of claims 7 to 10, **wherein** the digital camera (3) and/or the evaluation unit (6) stores the determined at least one calibration parameter and uses it to correct an image recorded by the digital camera (3).

12. A method of image correction for an image recorded by a digital camera (3) of an image processing system (2) or for correcting at least one property of an object (O₁, O₂, O₃) in an image of the object (O₁, O₂, O₃) recorded by the digital camera (3) of the image processing system (2), with a calibration device (1) as claimed in claims 1 to 6 being positioned in the recording area of a digital camera (3) and the digital camera (3) of the imaging processing system (2) recording at least one image of the calibration device (1), **wherein** the digital camera (3) reads specified arrangement properties, a reference target position of a reference calibration feature and a correction parameter from the at least one information storage means (5) and transmits them to an evaluation unit (6) of the image processing system (1), **wherein** the evaluation unit (6) ascertains a target position of at least one further calibration feature from the specified arrangement properties and the reference target position of the reference calibration feature and evaluates the at least one image of the calibration device (1) and also the reference target position of the reference calibration feature, the target position of the at least one further calibration feature and the correction parameter from the at least one information storage means (5) in order to determine the at least one calibration parameter, **and wherein** the digital camera (3) and/or the evaluation unit (6) stores the determined at least one calibration parameter and uses it to correct an image recorded by the digital camera (3), or the digital camera (3) and/or the evaluation unit (6) ascertains at least one property of an object (O₁, O₂, O₃) from an image of the object (O₁, O₂, O₃) recorded by the digital camera (3) and stores the determined at least one calibration parameter and uses it to correct the at least one property of the object (O₁, O₂, O₃).

13. The method as claimed in claim 12, **wherein** the evaluation unit (6) receives at least one camera parameter from a factory calibration and ascertains the at least one calibration parameter for calibrating the digital camera (3) of the image processing system (2) from the at least one camera parameter together with the at least one image of the calibration device (1) and also the reference target position of the reference calibration feature, the target position of the at least one further calibration feature and the correction parameter from the at least one information storage means (5).

14. The method as claimed in either of claims 12 and 13, **wherein** the digital camera (3) and/or the evaluation unit (6) stores the determined at least one calibration parameter and uses it to correct an image of an object (O₁, O₂, O₃) recorded by the digital camera (3).

15. The method as claimed in any of claims 12 to 14, **wherein** the at least one calibration parameter is determined for a respective specified calibration distance (A, A₁, A₂) from a plurality of specified calibration distances (A, A₁, A₂) from the digital camera (3) of the image processing system (2) to the calibration device (1), and the at least one calibration parameter for the respective specified calibration distance (A, A₁, A₂) is stored in the digital camera (3) and/or the evaluation unit (6), **and wherein** an image of an object (O₁, O₂, O₃) recorded by the digital camera (3) is corrected by the at least one stored calibration parameter whose calibration distance (A, A₁, A₂) comes closest to the distance (A_{O1}, A_{O2}, A_{O3}) from the digital camera (3) to the object (O₁, O₂, O₃) while the object (O₁, O₂, O₃) is recorded, or an interpolation of the stored calibration parameters is carried out in order to determine the suitable at least one calibration parameter for the distance (A_{O1}, A_{O2}, A_{O3}) from the digital camera (3) to the object (O₁, O₂, O₃) while the object (O₁, O₂, O₃) is recorded.
